Europäisches Patentamt

European Patent Office

Office européen des brevets

(11) Numéro de publication: **0 008 966**

A1

## (12) DEMANDE DE BREVET EUROPEEN

(21) Numéro de dépôt: **79400547.0**

(22) Date de dépôt: **03.08.79**

(51) Int. Cl.³: **F 16 G 17/00**
**B 66 C 1/34**

(30) Priorité: 08.08.78 FR 7823940
16.01.79 FR 7901560

(43) Date de publication de la demande:
19.03.80 Bulletin 80 6

(84) Etats Contractants Désignés:
AT BE CH DE GB IT NL SE

(71) Demandeur: Société Anonyme dite: STAS SOCIETE
TECHNIQUE D'ACCESSOIRES SPECIALISES
77, rue Henri-Brisson
F-78500 Sartrouville(FR)

(72) Inventeur: Archer, Jean François
10, Avenue Georges Clémenceau
F-78670 Villennes(FR)

(74) Mandataire: Boivin, Claude
9, rue Edouard-Charton
F-78000 Versailles(FR)

(54) Crochet pour chaîne à maillons.

(57) Crochet comportant une ouverture de blocage 5 dont la base est suffisamment large pour recevoir un maillon de chaîne à plat, en position approximativement horizontale lorsque le crochet est suspendu, une rainure à faces parallèles 6, qui est située dans un plan perpendiculaire à celui de la base de cette ouverture, débouchant dans cette base.

Pour permettre l'utilisation du crochet avec une chaîne quelconque, de manière réversible, l'ouverture de blocage constitue au moins la partie inférieur de l'ouverture du crochet; les extrémités transversales 5b de ladite ouverture sont évasées; enfin une rainure 6 à faces parallèles débouche dans chacune de ces extrémités transversales.

Fig. 2

EP 0 008 966 A1

0008966

- 1 -

Crochet pour chaîne à maillons.

La présente invention concerne les crochets dits "à bec parallèle" c'est-à-dire dont le bec présente une face intérieure parallèle à la face extérieure du corps du crochet, qui est située en regard, en délimitant une ouverture de largeur sensiblement constante. Ces crochets sont utilisables en particulier avec les chaînes à maillons présentant des branches parallèles. En effet, on peut alors immobiliser la chaîne par rapport au crochet en engageant l'un de ses maillons dans l'ouverture dudit crochet; cela permet de raccourcir la partie active de la chaîne.

Mais dans les crochets à bec parallèle jusqu'à présent réalisés, par exemple celui décrit dans la demande de brevet allemand 2 406 239, le maillon engagé dans l'ouverture du crochet est sur chant et approximativement vertical. Ce maillon travaille mal, car tout l'effort s'exerce pratiquement sur sa branche supérieure. On ne peut utiliser la chaîne avec une charge supérieure à la moitié de la charge nominale, car le maillon engagé dans l'ouverture du crochet risquerait de se rompre.

Diverses solutions ont été proposées pour remédier à cet inconvénient. On connaît, en particulier, des crochets munis d'ergots latéraux qui s'engagent dans les maillons adjacents à celui disposé dans l'ouverture du crochet et supportent ainsi une partie de la charge. Mais ces ergots sont fragiles, car ils doivent avoir une section leur permettant de traverser les maillons; si l'on veut augmenter leurs dimensions, on est obligé d'augmenter également le pas de la chaîne.

On connaît aussi par le brevet américain 3 863 441 des crochets avec berceau qui présentent un fond plat de façon à supporter sur pratiquement toute sa longueur le maillon qui est engagé dans cette ouverture. Mais ces crochets doivent être ajustés parfaitement à la forme et aux dimensions du maillon.

On connaît également par le brevet français 2 078 216 des dispositifs de fixation pour chaîne comportant un bloc muni d'une ouverture de blocage dont la base est suffisamment large pour recevoir un maillon de chaîne à plat, en position approximativement horizontale lorsque le bloc est vertical, une rainure à faces parallèles, qui est située dans un plan perpendiculaire à celui de la base de cette ouverture, débouchant dans cette base. Dans ces dispositifs, le blocage est assuré par le maillon disposé à plat, en position horizontale et on peut accrocher une charge au maillon qui est engagé dans la rainure à faces parallèles et dont l'axe est sensiblement vertical; le maillon disposé à plat, en position horizontale travaille dans de bonnes conditions. Mais les dispositifs de ce genre ne sont pas réversibles, contrairement à ce qui est le cas d'un crochet à bec parallèle, c'est-à-dire que la chaîne est tordue si l'on accroche une charge sur le brin de chaîne opposé, c'est-à-dire sur le brin non vertical; cela peut être la source d'accident

La présente invention a pour objet un crochet à bec parallèle, qui pallie ces divers inconvénients et peut, en particulier, être utilisé avec une chaîne quelconque.

Ce crochet qui comporte, comme le dispositif de fixation connu, une ouverture de blocage dont la base est suffisamment large pour recevoir un maillon de chaîne à plat, en position approximativement horizontale lorsque le bloc est vertical, une rainure à faces parallèles, qui est située dans un plan perpendiculaire à celui de la base de cette ouverture, débouchant dans cette base, est caractérisé en ce que ladite ouverture de blocage constitue l'ouverture du crochet, ou au moins sa partie inférieure, en ce que les extrémités transversales de ladite ouverture sont évasées, et en ce qu'une rainure à faces parallèles débouche dans chacune de ces extrémités transversales.

0008966

Pour immobiliser une chaîne à maillons dans le crochet, on engage un maillon de cette chaîne dans l'ouverture du crochet de façon que ce maillon vienne se loger à plat, en position sensiblement horizontale sur le fond de cette ouverture; les maillons adjacents se trouvent alors disposés verticalement dans les rainures. Lorsqu'on accroche une charge à l'un ou l'autre des maillons verticaux disposés de part et d'autre du maillon en position horizontale, ce dernier maillon glisse de façon que l'autre maillon vertical vienne buter contre l'extrémité transversale évasée correspondante de l'ouverture, ce qui bloque la chaîne en position. Le maillon emprisonné étant pratiquement horizontal travaille dans d'excellentes conditions et ne constitue pas un point faible de la chaîne. La charge peut être accrochée à l'un ou l'autre des maillons verticaux et l'axe de ces maillons peut sans inconvénient être oblique par rapport à la verticale. Par ailleurs, le crochet présente une sécurité naturelle, car, pour ressortir la chaîne engagée dans le crochet, il faut que trois maillons se trouvent en ligne, ce qui nécessite une intervention manuelle de la part de l'opérateur. Pour obtenir une sécurité supplémentaire, il est possible de munir le crochet d'un linguet de sécurité empêchant tout décrochage intempestif de la chaîne, ce qui est pratiquement impossible avec les crochets à becs parallèle usuels.

Dans le cas où ladite ouverture de blocage constitue la totalité de l'ouverture du crochet, le bec de celui-ci peut comporter un becquet en saillie par rapport au fond de cette ouverture. Ce becquet facilite une mise en place correcte de la chaîne et assure une certaine sécurité.

Le linguet de sécurité peut être monté pivotant sur le corps du crochet de façon à pouvoir occuper une position dans laquelle il obture partiellement l'une des extrémités de l'ouverture de blocage.

Dans un mode de réalisation avantageux de l'invention, le linguet de sécurité comporte un renflement interne propre à s'engager dans ladite extrémité de l'ouverture de blocage et est maintenu par des moyens élastiques sur le corps du crochet. Du fait de ce renflement, le linguet ne peut normalement pivoter que jusqu'à une position dans laquelle l'ouverture de blocage du crochet n'est pas suffisamment dégagée pour permettre la mise en place ou le retrait d'un maillon de la chaîne. Pour permettre cette mise en place ou ce retrait, il est nécessaire d'écarter le linguet du corps du crochet, contre l'action des moyens élastiques; il est alors possible de faire pivoter suffisamment le linguet pour dégager l'ouverture du crochet.

Le corps du crochet peut comporter, sur sa face latérale située du même côté que le linguet, un bossage s'étendant au-dessus de l'ouverture transversale du crochet.

On a décrit ci-après, à titre d'exemples non limitatifs, deux modes de réalisation du crochet selon l'invention, avec référence au dessin annexé dans lequel :

La Figure 1 est une vue en élévation du crochet, dans un premier mode de réalisation,

La Figure 2 en est une coupe suivant II-II de la Figure 1.

La Figure 3 est une vue en élévation du crochet dans un second mode de réalisation.

La Figure 4 en est une coupe suivant IV-IV de la Figure 1.

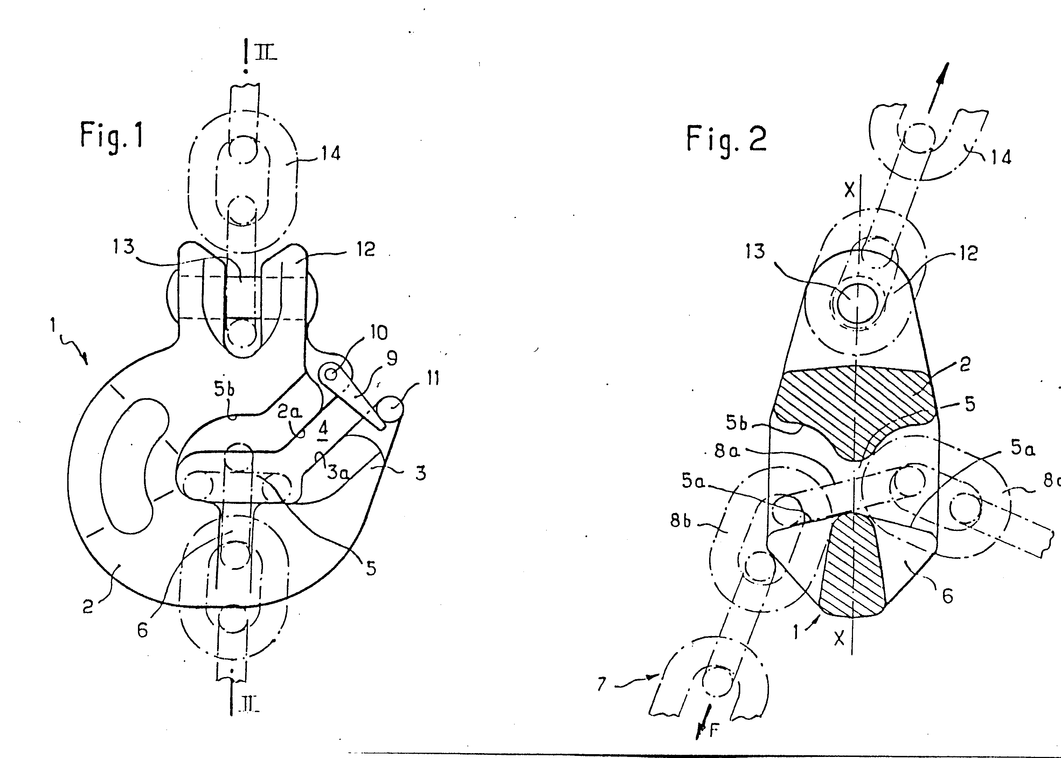

Tel qu'il est représenté aux Figures 1 et 2, le crochet qui est désigné d'une façon générale par la référence 1, comporte un corps 2 solidaire d'un bec 3. La face intérieure 3a de ce bec est parallèle à la face extérieure 2a du corps du crochet, qui est située en regard, en délimitant une ouverture 4 de largeur sensiblement constante.

L'ouverture 4 débouche dans une ouverture de blocage transversale 5, relativement large, dont le fond 5a est sensiblement horizontal; il est cependant de préférence formé de deux faces symétriques par rapport au plan médian longitudinal X – X du crochet et qui font avec le plan horizontal un angle faible, de l'ordre de 5 à 20°. Dans sa partie centrale, l'ouverture 5 a une hauteur supérieure à la largeur de l'ouverture 4. Cette ouverture 5 s'évase de part et d'autre du plan X - X, la face supérieure 5b de ses extrémités étant arrondie, sensiblement suivant le contour extérieur d'un maillon de chaîne.

De part et d'autre du plan X - X, le fond 5a de l'ouverture 5 comporte dans sa partie médiane une rainure verticale 6, à face parallèle, dont la largeur est sensiblement égale à celle de l'ouverture 4 et qui est située dans un plan perpendiculaire à celui de l'ouverture transversale 5 (à savoir dans le plan de la Figure 2).

Pour immobiliser une chaîne à maillons 7 par rapport au crochet 1, on engage un maillon 8a de cette chaîne dans l'ouverture 4, puis dans l'ouverture 5, jusqu'à ce qu'il repose sur le fond 5a de cette ouverture et soit sensiblement horizontal. Les maillons adjacents 8b et 8c sont verticaux et engagés dans les rainures 6.

Lorsque la chaîne est soumise à un effort, comme indiqué par la flèche F, le maillon 8c empêche la chaîne de sortir du crochet. Le maillon 8a est ainsi maintenu prisonnier par le maillon 8c et l'effort F qui s'exerce sur lui est réparti de manière symétrique sur ses deux branches. Le maillon 8b travaille de manière normale.

Si l'on tire sur l'autre brin de la chaîne, le maillon 8a bascule, ce qui est rendu possible par le fait que la hauteur de la partie centrale de l'ouverture 5 est supérieure à l'épaisseur du maillon, et est alors maintenu prisonnier par le maillon 8b. Le crochet peut donc être utilisé quelque soit le brin de la chaîne sur lequel l'effort F est exercé.

Le crochet 1 est démuni d'ergots latéraux dont la courbure exige une opération de forge supplémentaire.

D'autre part, en raison de la dimension du plat 5a, un même crochet peut être utilisé avec des chaînes 7 de pas variable entre certaines limites, pourvu que le maillon 8b travaille normalement et que l'extrémité du maillon 8a engagée dans le maillon 8b repose sur ledit plat 5a.

Dans l'exemple représenté, le crochet 1 comporte un linguet de sécurité 9 qui est monté pivotant en 10 sur le corps du crochet et est empêché de pivoter vers l'extérieur par une butée 11 portée par le bec 3.

A sa partie supérieure, le crochet 1 comporte deux oreilles 12 qui sont traversées par un axe 13 permettant la fixation d'une chaîne 14.

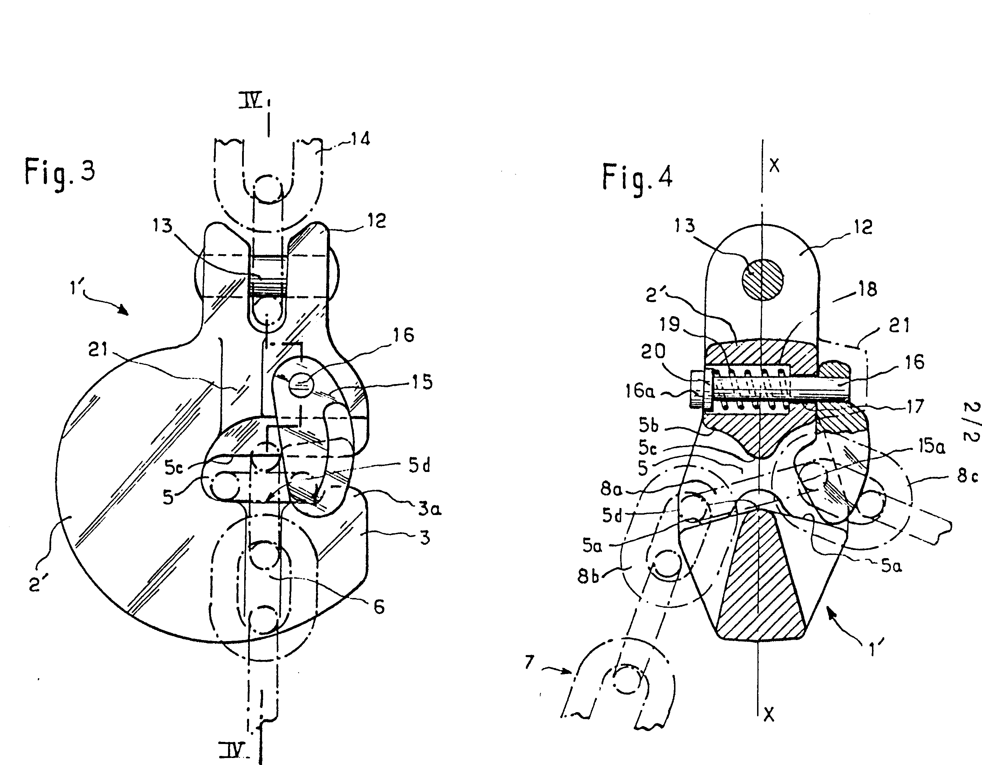

Aux Figures 3 et 4 le crochet 1' comprend un corps 2' dans lequel on retrouve l'ouverture de blocage 5 dont le fond pourrait être rigoureusement horizontal; mais ce fond est, de préférence, formé de deux faces 5a symétriques par rapport au plan médian longitudinal X - X du crochet et qui fait avec le plan horizontal, c'est-à-dire avec un plan perpendiculaire au plan X - X, un angle de faibl de l'ordre de 5 à 20°. Cette ouverture 5 s'évase de part et d'autr du plan X - X, la face supérieure 5b de ses extrémités étant arron die, sensiblement suivant le contour extérieur d'un maillon de cha ne; les faces 5b se raccordent par une arête arrondie 5c qui est parallèle à l'arête arrondie 5d reliant les faces 5a de l'ouvertur On retrouve également les rainures verticales 6, à faces parallèl qui débouchent dans le fond de l'ouverture 5 et qui sont situées dans un plan perpendiculaire à celui de cette ouverture; la largeu de ces rainures est sensiblement égale à l'épaisseur d'un maillon de la chaîne.

Mais l'ouverture 5 constitue ici elle-même et à elle seule la totalité de l'ouverture du crochet. Le bec 3 du crochet se trouve ai si dans le prolongement de l'arête arrondie 5d de l'ouverture 5. I y a cependant avantage à prévoir un becquet 3a qui fait légèrement saillie par rapport à cette arête 5d et dont l'extrémité est écartée de l'arête 5c d'une distance sensiblement égale à l'épaisseur des maillons de la chaîne, c'est-à-dire sensiblement égale à la la geur des rainures 6.

Un linguet de sécurité 15 est solidaire d'un axe 16 qui est monté pivotant dans un trou 17 prévu transversalement dans le corps 2', au-dessus de l'ouverture 5. Ce trou est prolongé par une cavité 18 dans laquelle est logé un ressort 19 prenant appui sur le fond de la cavité 18 et sur une rondelle de butée 20 montué

sur l'axe 16 et immobilisée par la tête 16a de cet axe. Ce ressort maintient le linguet 15 dans une position dans laquelle il est sensiblement perpendicualire aux arêtes 5c et 5d de l'ouverture 5, en appui contre l'une des faces latérales du corps 2' du crochet, et obture partiellement l'extrémité de cette ouverture, à proximité du becquet 3a.

Dans sa partie opposée à l'axe 16, le linguet 15 comporte un renflement interne 15a qui est engagé partiellement dans l'ouverture 5. Si le linguet pivote, le renflement 15a vient rencontrer la face 5b de l'ouverture 5 et limite ainsi l'angle de pivotement à une valeur telle que le linguet ne dégage pas complètement l'ouverture 5. Pour dégager l'ouverture, il est nécessaire de tirer sur le linguet de façon à l'écarter de la face latérale du corps 2', contre l'action du ressort 19; on peut alors le faire pivoter librement d'environ 90°. Quand on relâche le crochet, le renflement 15a se trouve en appui sur le corps 2'.

Le corps 2' comporte sur sa face latérale située du même côté que le linguet 15 un bossage 21 qui est perpendiculaire aux arêtes 5c et 5d de l'ouverture 5 et s'étend au-dessus de cette ouverture . Ce bossage 21 a pour but de protéger le linguet 15 pour éviter un déverrouillage intempestif lorsque le crochet vient à heurter une pièce lors du levage d'une charge ou encore lorsque le crochet est tiré sous la charge au moment de désélingage.

Enfin, on retrouve à la partie supérieure du crochet 1' les deux oreilles 12 qui sont traversées par l'axe 13 permettant la fixation de la chaîne 14.

Pour immobiliser la chaîne à maillons 7 par rapport au crochet 1', on amène le linguet 15 dans sa position escamotée et on engage horizontalement un maillon 8a de cette chaîne dans l'ouverture 5 jusqu'à ce qu'il repose sur l'arête 5d de cette ouverture; le maillon bascule ensuite de lui-même de façon à reposer sur l'une des faces 5a. Cette introduction se fait très facilement, sans que le maillon puisse occuper une position incorrecte. En fin de mouvement, les maillons adjacents 8b et 8c sont verticaux et engagés dans les rainures 6. Il ne reste plus qu'à rabattre le linguet 15.

0008966

Le becquet 3a oblige l'utilisateur à engager le maillon 8a bien dans l'axe du crochet. Il assure en outre, une certaine sécurité par suite d'un oubli, le linguet de sécurité n'a pas été rabattu.

Pour retirer la chaîne 7, il suffit, après avoir ramené le linguet 15 dans sa position escamotée, d'exercer une traction sur les extrémités des maillons 8b et 8c de façon à mettre en ligne les trois maillons 8a, 8b et 8c et de dégager l'ensemble horizontalement.

Il va de soi que la présente invention ne doit pas être considérée comme limitée aux modes de réalisation décrits et représentés, mais en couvre, au contraire, toutes les variantes.

0008966

Revendications de brevet

1. Crochet comportant une ouverture de blocage dont la base est suffisamment large pour recevoir un maillon de chaîne à plat, en position approximativement horizontale lorsque le crochet est suspendu, une rainure à faces parallèles, qui est située dans un plan perpendiculaire à celui de la base de cette ouverture, débouchant dans cette base, caractérisé en ce que ladite ouverture de blocage constitue au moins la partie inférieure de l'ouverture du crochet, en ce que les extrémités transversales de ladite ouverture sont évasées, et en ce qu'une rainure à faces parallèles débouche dans chacune de ces extrémités transversales.

2. Crochet selon la revendication 1, caractérisé en ce que la base de ladite ouverture est formée de deux faces symétriques par rapport au plan médian longitudinal du crochet et faisant avec le plan horizontal un angle faible de l'ordre de 5 à 20°.

3. Crochet selon l'une des revendications 1 et 2, caractérisé en ce que la hauteur de ladite ouverture est supérieure à la largeur de l'ouverture délimitée par le bec du crochet.

4. Crochet selon la revendication 1 ou 2, caractérisé en ce que ladite ouverture de blocage constitue l'ensemble de l'ouverture du crochet, l'extrémité du bec de celui-ci étant ainsi située sensiblement dans le prolongement du fond de cette ouverture.

5. Crochet selon la revendication 4, caractérisé en ce que le bec du crochet comporte un becquet en saillie par rapport au fond de cette ouverture. Ce becquet facilite une mise en place correcte de la chaîne et assure une certaine sécurité.

6. Crochet selon la revendication 5, caractérisé en ce que le becquet est écarté de la face supérieure de l'ouverture transversale d'une distance sensiblement égale à la largeur des rainures verticales.

7. Crochet selon l'une quelconque des revendications 1 à 6, caractérisé en ce qu'il est muni d'un linguet de sécurité.

0008966

8. Crochet selon l'une quelconque des revendications 4 à 7, caractérisé par un linguet de sécurité qui est monté pivotant sur le corps du crochet de façon à pouvoir occuper une position dans laquelle il obture partiellement l'une des extrémités de l'ouverture de blocage.

9. Crochet selon la revendication 8, caractérisé en ce que le linguet de sécurité comporte un renflement interne propre à s'engager dans ladite extrémité de l'ouverture de blocage et est maintenu par des moyens élastiques sur le corps du crochet.

10. Crochet selon la revendication 8 ou 9, caractérisé en ce que son corps comporte, sur sa face latérale située du même côté que le linguet, un bossage s'étendant au-dessus de l'ouverture transversale du crochet, ce bossage ayant pour but de protéger le linguet pour éviter un déverrouillage intempestif lorsque ce crochet vient à heurter une pièce lors du levage d'une charge ou encore lorsque le crochet est tiré sous la charge au moment du désélingage.

Fig.1

14

13

12

1

5b

2a

10

9

11

4

3a

3

5

2

6

II

II

Fig.2

14

X

13

12

2

5

5b

8a

5a

5a

8c

8b

6

1

X

7

F

1/2

9968000

Fig. 3

Fig. 4

0008966

## RAPPORT DE RECHERCHE EUROPEENNE

Office européen
des brevets

| Catégorie | Citation du document avec indication, en cas de besoin, des parties pertinentes | Revendication concernee |
|---|---|---|
| AD | <u>FR - A - 2 078 216</u> (BRITISH STEEL) <br> * Page 3, ligne 3 - page 4, ligne 25; figures 1-3 * | 1 |
| | -- | |
| P | <u>FR - A - 2 387 897</u> (BERGS SMIDE) <br> * Page 4, ligne 27 - page 6, ligne 33; figures 9-12 * | 1 |
| | -- | |
| | <u>US - A - 3 673 646</u> (SVENSSON) <br> * Figures 1-3 * | 2 |
| | -- | |
| | <u>US - A - 3 344 489</u> (RASCHKE) <br> * Colonne 2, lignes 6-54; figures 1-3 * | 7,8 |
| | ---- | |

**DOCUMENTS CONSIDERES COMME PERTINENTS**

**CLASSEMENT DE LA DEMANDE (Int. Cl.)**

F 16 G 17/00
B 66 C 1/34

**DOMAINES TECHNIQUES RECHERCHES (Int. Cl.)**

F 16 G
B 66 C
F 16 B
E 21 B

**CATEGORIE DES DOCUMENTS CITES**

X: particulièrement pertinent
A: arrière-plan technologique
O: divulgation non-écrite
P: document intercalaire
T: theorie ou principe à la base de l'invention
E: demande faisant interference
D: document cité dans la demande
L: document cite pour d'autres raisons

&: membre de la même famille. document correspondant

Le present rapport de recherche a ete établi pour toutes les revendications

| Lieu de la recherche | Date d achevement de la recherche | Examinateur |
|---|---|---|
| La Haye | 03-10-1979 | SIGWALT |

OEB Form 1503.1 06.78